(19) Europäisches Patentamt / European Patent Office / Office européen des brevets

(11) EP 2 629 986 B1

(12) FASCICULE DE BREVET EUROPEEN

(45) Date de publication et mention de la délivrance du brevet: **10.12.2014 Bulletin 2014/50**

(21) Numéro de dépôt: **11767723.7**

(22) Date de dépôt: **12.10.2011**

(51) Int Cl.:
***B60C 1/00*** *(2006.01)* ***C08K 3/30*** *(2006.01)*
***C08K 5/00*** *(2006.01)*

(86) Numéro de dépôt international: **PCT/EP2011/067795**

(87) Numéro de publication internationale: **WO 2012/052331 (26.04.2012 Gazette 2012/17)**

# (54) COMPOSITION DE CAOUTCHOUC POUR BANDE DE ROULEMENT DE PNEUMATIQUE

KAUTSCHUKZUSAMMENSETZUNG FÜR EIN REIFENPROFIL

RUBBER COMPOSITION FOR A TIRE TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2010 FR 1058450**

(43) Date de publication de la demande: **28.08.2013 Bulletin 2013/35**

(73) Titulaires:
- **Compagnie Générale des Etablissements Michelin 63000 Clermont-Ferrand (FR)**
- **MICHELIN Recherche et Technique S.A. 1763 Granges-Paccot (CH)**

(72) Inventeurs:
- **MAESAKA, Masayuki Gunma 373-8668 (JP)**
- **PAGANO, Salvatore Tokyo 102-8176 (JP)**
- **WATANABE, Makiko Gunma 373-8668 (JP)**

(74) Mandataire: **Ribière, Joel Manufacture Française des Pneumatiques Michelin 23, place des Carmes-Déchaux DGD/PI - F35 - Ladoux 63040 Clermont-Ferrand Cedex (FR)**

(56) Documents cités:
**EP-A1- 1 829 934**
**WO-A1-2009/112220**
**WO-A1-2010/009850**
**US-A- 3 878 147**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 629 986 B1

## Description

### DOMAINE DE L'INVENTION

L'invention est relative aux compositions caoutchouteuses utilisables comme bandes de roulement de pneumatiques, en particulier comme bandes de roulement de « pneumatiques hiver » aptes à rouler sur des sols recouverts de glace ou verglas sans être pourvus de clous (aussi appelés pneumatiques "*sludless*").

Elle est plus particulièrement relative aux bandes de roulement de pneumatiques spécifiquement adaptées à un roulage sous des conditions dites de "glace fondante" rencontrées dans un domaine de températures typiquement comprises entre -5°C et 0°C. On rappelle en effet que, dans un tel domaine, la pression des pneumatiques au passage d'un véhicule provoque une fusion superficielle de la glace qui se recouvre d'un mince film d'eau nuisible à l'adhérence de ces pneumatiques.

### ETAT DE LA TECHNIQUE

Pour éviter les effets néfastes des clous, notamment leur forte action abrasive sur le revêtement du sol lui-même et un comportement routier notablement dégradé sur sol sec, les manufacturiers de pneumatiques ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant à incorporer des poudres hydrosolubles dans la composition constitutive de la bande de roulement. De telles poudres se solubilisent plus ou moins au contact de la neige ou de la glace fondue, ce qui permet d'une part la création à la surface de la bande de roulement de pneumatique de porosités susceptibles d'améliorer l'accrochage de la bande de roulement sur le sol et d'autre part la création de gorges jouant le rôle de canaux d'évacuation du film liquide créé entre le pneumatique et le sol. Dans tous ces exemples, la solubilité à très basse température et dans un temps très court de la poudre utilisée est un facteur essentiel au bon fonctionnement de la bande de roulement. Si la poudre n'est pas soluble dans les conditions d'utilisation du pneumatique, les fonctions précitées (création de microporosités et de canaux d'évacuation de l'eau) ne sont pas remplies et l'adhérence n'est pas améliorée. Un inconvénient connu de ces solutions est qu'elles peuvent toutefois pénaliser le renforcement des compositions de caoutchouc (et donc leur résistance à l'usure) ou leur hystérèse (et donc leur résistance au roulement).

La demande de brevet WO 2010/009850 déposée par les Demanderesses a décrit une composition de caoutchouc spécifique, apte a générer une microrugosité de surface efficace grâce à des microparticules hydrosolubles de sulfate de magnésium, et qui permet d'améliorer l'adhérence sur glace des bandes de roulement et des pneumatiques les comportant, sous conditions de glace fondante, sans pénaliser les propriétés de renforcement et d'hystérèse.

Dans un premier temps, ces microparticules hydrosolubles, protubérantes à la surface de la bande de roulement, remplissent la fonction de griffe précédemment décrite sans l'inconvénient d'être abrasives. Puis, dans un second temps, après expulsion progressive de la matrice caoutchouteuse, elles libèrent des microcavités qui jouent le rôle de volume de stockage et de canal d'évacuation du film d'eau à la surface de la glace ; dans ces conditions, le contact entre la surface de la bande de roulement et la glace n'est plus lubrifié et le coefficient de friction est ainsi amélioré.

### BREVE DESCRIPTION DE L'INVENTION

Poursuivant leurs recherches, les Demanderesses ont découvert une catégorie plus spécifique de microparticules de sulfates hydrosolubles qui permet d'améliorer encore le coefficient de friction sur glace et la performance de freinage sur glace fondante.

Ainsi, un premier objet de l'invention concerne une composition de caoutchouc utilisable comme bande de roulement d'un pneumatique, à base d'au moins un élastomère diénique, plus de 30 pce d'un agent plastifiant liquide, entre 50 et 150 pce d'une charge renforçante, entre 2 et 40 pce de microparticules d'un sulfate hydrosoluble de métal alcalin ou alcalino-terreux, cette composition étant caractérisée en ce que la distribution volumétrique de taille desdites microparticules, mesurée par granulométrie laser selon la norme ISO 13320-1, satisfait les relations suivantes :

- $50\ \mu m < D_{50} < 150\ \mu m$ ;
- $0,50 <$ *Span* $< 1,50$ ,

dans lesquelles :

- $D_{50}$ est le diamètre de la particule médiane correspondant à 50% de la distribution cumulative des microparticules ;
-

$$Span = (D_{90} - D_{10}) / D_{50} ;$$

- $D_{10}$ et $D_{90}$ représentent le diamètre de particule correspondant respectivement à 10% et à 90% de la distribution cumulative des particules.

L'invention a également pour objet l'utilisation d'une telle composition de caoutchouc pour la fabrication de bandes de roulement de pneumatiques, que ces dernières soient destinées à des pneumatiques neufs comme au rechapage de pneumatiques usagés.

L'invention a également pour objet ces bandes de roulement et ces pneumatiques eux-mêmes lorsqu'ils comportent une composition de caoutchouc conforme à l'invention.

Les pneumatiques de l'invention sont particulièrement destinés à équiper des véhicules à moteur de type tourisme, incluant les véhicules 4x4 (à quatre roues motrices) et véhicules SUV ("Sport Utility Vehicles"), des véhicules deux roues (notamment motos) comme des véhicules industriels choisis en particulier parmi camionnettes et "poids-lourd" (par exemple métro, bus, engins de transport routier tels que camions, tracteurs, remorques).

L'invention ainsi que ses avantages seront aisément compris à la lumière de la description et des exemples de réalisation qui suivent.

<u>DESCRIPTION DETAILLEE DE L'INVENTION</u>

Dans la présente description, sauf indication expresse différente, tous les pourcentages (%) indiqués sont des pourcentages en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

La composition de caoutchouc de l'invention est à base d'au moins un élastomère diénique, un agent plastifiant liquide, une charge renforçante et des microparticules d'un sulfate hydrosoluble d'un métal alcalin ou alcalino-terreux, constituants qui sont décrits en détail ci-après.

Par l'expression "à base de", il faut bien entendu comprendre une composition comportant le mélange des différents constituants utilisés ou le cas échéant leur produit de réaction, certains de ces constituants de base étant notamment susceptibles de, ou destinés à, réagir entre eux, au moins en partie, lors des différentes phases de fabrication de la composition, en particulier au cours de sa réticulation ou vulcanisation.

<u>Elastomère diénique</u>

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

A titre préférentiel conviennent les polybutadiènes et en particulier ceux ayant une teneur en unités -1,2 comprise

entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, l'élastomère diénique utilisé est majoritairement, c'est-à-dire pour plus de 50 pce (pour rappel, "pce" ou *"phr"* en anglais signifiant parties en poids pour cent parties d'élastomère ou caoutchouc), du caoutchouc naturel (NR) ou un polyisoprène de synthèse (IR). Plus préférentiellement, ledit caoutchouc naturel ou polyisoprène de synthèse est alors utilisé en coupage avec un polybutadiène (BR) ayant un taux de liaisons cis-1,4 qui est de préférence supérieur à 90%.

Selon un autre mode de réalisation particulier et préférentiel, l'élastomère diénique utilisé est majoritairement, c'est-à-dire pour plus de 50 pce, un polybutadiène (BR) ayant un taux de liaisons cis-1,4 supérieur à 90%. Plus préférentiellement, ledit polybutadiène est alors utilisé en coupage avec du caoutchouc naturel ou un polyisoprène de synthèse.

Selon un autre mode de réalisation particulier et préférentiel, l'élastomère diénique utilisé est un coupage (mélange) binaire de NR (ou IR) et de BR, ou un coupage ternaire de NR (ou IR), BR et SBR. De préférence, dans le cas de tels coupages, la composition comporte entre 25 et 75 pce de NR (ou IR) et entre 75 et 25 pce de BR, auxquels peut être associé ou non un troisième élastomère (coupage ternaire) à un taux inférieur à 30 pce, notamment inférieur à 20 pce. Ce troisième élastomère est de préférence un élastomère SBR, notamment un SBR solution (dit "SSBR"). Plus préférentiellement encore, dans le cas d'un tel coupage, la composition comporte de 35 à 65 pce de NR (ou IR) et de 65 à 35 pce de BR Le BR utilisé est de préférence un BR ayant un taux de liaisons cis-1,4 supérieur à 90%, plus préférentiellement supérieur à 95%.

Aux élastomères diéniques des compositions de l'invention pourraient être associés, en quantité minoritaire, des élastomères synthétiques autre que diéniques, voire des polymères autres que des élastomères, par exemple des polymères thermoplastiques.

<u>Agent plastifiant liquide</u>

La composition de caoutchouc de l'invention a pour autre caractéristique essentielle de comporter plus de moins 30 pce d'un agent plastifiant liquide (à 23°C) dont la fonction est de ramollir la matrice en diluant l'élastomère et la charge renforçante; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Médium Extracted Solvates*), les huiles TDAE (*Treated Distillate Aromatic Extracts*), les huiles minérales, les huiles végétales, les plastifiants éthers, les plastifiants esters, les plastifiants phosphates, les plastifiants sulfonates et les mélanges de ces composés.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement

(pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition de l'invention est de préférence supérieur à 40 pce, plus préférentiellement compris dans un domaine de 50 à 100 pce.

Selon un autre mode de réalisation préférentiel, les compositions de l'invention peuvent comporter aussi, à titre de plastifiant solide (à 23°C), une résine hydrocarbonée présentant une Tg supérieur à +20°C, de préférence supérieure à +30°C, telles que décrites par exemple dans les demandes WO 2005/087859, WO 2006/061064 et WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles ont été décrites par exemple dans l'ouvrage intitulé "hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5); détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère terpène, les résines d'homopolymère ou copolymère de coupe C5, les résines d'homopolymère ou copolymère de coupe C9, et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Le taux d'agent plastifiant total (i.e., plastifiant liquide plus, le cas échéant, résine hydrocarbonée solide) est de préférence compris entre 40 et 100 pce, plus préférentiellement compris dans un domaine de 50 à 80 pce.

Charge renforçante

On peut utiliser tout type de charge renforçante connue pour ses capacités à renforcer une composition de caoutchouc utilisable pour la fabrication de pneumatiques, par exemple une charge organique telle que du noir de carbone, ou encore une charge inorganique renforçante telle que de la silice à laquelle est associé de manière connue un agent de couplage.

Une telle charge renforçante consiste typiquement en des nanoparticules dont la taille moyenne (en masse) est inférieure à 500 nm, le plus souvent comprise entre 20 et 200 nm, en particulier et préférentiellement entre 20 et 150 nm.

Comme noirs de carbone conviennent tous les noirs de carbone, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche" ou parfois charge "claire" ou par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

De manière préférentielle, le taux de charge renforçante totale (noir de carbone et/ou charge inorganique renforçante) est compris entre 60 et 120 pce, notamment entre 70 et 100 pce.

Selon un mode de réalisation particulier, la charge renforçante comprend du noir de carbone à titre majoritaire ; dans un tel cas, le noir de carbone est présent à un taux préférentiellement supérieur à 60 pce, associé ou non à une charge inorganique renforçante telle que silice en quantité minoritaire.

Selon un autre mode de réalisation particulier, la charge renforçante comprend une charge inorganique, notamment de la silice, à titre majoritaire ; dans un tel cas, la charge inorganique, notamment silice, est présente à un taux préférentiellement supérieur à 70 pce, associée ou non à du noir de carbone en quantité minoritaire ; le noir de carbone, lorsqu'il est présent, est utilisé de préférence à un taux inférieur à 20 pce, plus préférentiellement inférieur à 10 pce (par exemple entre 0,1 et 10 pce).

Indépendamment de l'aspect premier de l'invention, à savoir la recherche d'une adhérence optimisée sur glace fondante, l'emploi à titre majoritaire d'une charge inorganique renforçante telle que silice est également avantageux du point de vue de l'adhérence sur sol mouillé ou enneigé.

Selon un autre mode de réalisation possible de l'invention, la charge renforçante comprend un coupage de noir de carbone et de charge inorganique renforçante telle que silice en des quantités voisines ; dans un tel cas, le taux de charge inorganique, notamment silice, et le taux de noir de carbone sont de préférence chacun compris entre 25 et 75 pce, plus particulièrement chacun compris entre 30 et 50 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou

US 2005/016650).

Conviennent en particulier, sans que la définition ci-après soit limitative, des silanes polysulfurés dits "symétriques" répondant à la formule générale (I) suivante:

(I) $Z\text{-}A\text{-}S_x\text{-}A\text{-}Z$,

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

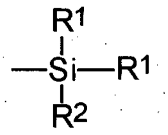 ; 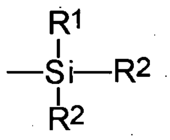 ; 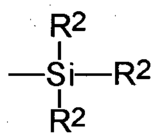 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule (I) ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 2 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Microparticules de sulfate hydrosoluble

La composition de caoutchouc de l'invention a pour autre caractéristique essentielle de comporter entre 2 et 40 pce de microparticules d'un sulfate hydrosoluble d'un métal alcalin ou alcalino-terreux, à distribution de taille spécifique.

Ces microparticules spécifiques selon l'invention sont caractérisées d'une part par une taille médiane spécifique ($D_{50}$) et d'autre part par une distribution de taille particulièrement étroite qui, toutes deux mesurées par granulométrie laser, satisfont les relations suivantes :

-

$$50\ \mu m < D_{50} < 150\ \mu m ;$$

- $$0,50 < Span < 1,50.$$

$D_{50}$ est le diamètre de la particule médiane correspondant à 50% en volume de la distribution cumulative des particules, c'est-à-dire que, par volume, 50% des particules ont un diamètre inférieur à $D_{50}$ et 50% des particules ont un diamètre supérieur à $D_{50}$. On préfère que la taille $D_{50}$ soit comprise entre 75 et 125 $\mu$m, pour un compromis optimisé entre la rugosité de surface recherchée et un bon contact entre la composition de caoutchouc et la glace.

L'étroitesse de la distribution volumique de taille des particules est mesurée de manière connue par le paramètre *Span,* défini selon l'équation suivante :

$$Span = (D_{90} - D_{10}) / D_{50}$$

dans laquelle :

- $D_{10}$ et $D_{90}$ représentent le diamètre de particule correspondant respectivement à 10% et à 90% (en volume) de la distribution cumulative des particules ;
- $D_{50}$ est le diamètre de la particule médiane correspondant à 50% (en volume) de la distribution cumulative des particules, c'est-à-dire que, par volume, 50% des particules ont un diamètre inférieur à $D_{50}$ et 50% des particules ont un diamètre supérieur à $D_{50}$.

De préférence, la valeur de *Span* est comprise entre 0,75 et 1,25.

Selon un autre mode préférentiel, la valeur $D_{10}$ est supérieure à 30 $\mu$m, plus préférentiellement supérieure à 40 $\mu$m, en particulier supérieure à 50 $\mu$m. Selon un autre mode préférentiel, combiné ou non au précédent, la valeur $D_{90}$ est inférieure à 180 $\mu$m, plus préférentiellement inférieure à 160 $\mu$m, en particulier inférieure à 150 $\mu$m.

D'autre part, pour l'obtention d'un compromis optimisé entre l'effet technique visé (création d'une microrugosité adaptée), la performance d'adhérence sur glace fondante et le coût, le taux de microparticules dans la composition de l'invention est de préférence compris entre 2 et 30 pce, plus préférentiellement compris entre 5 et 20 pce.

La répartition granulométrique en volume (ou distribution volumétrique de taille) est caractérisée de manière connue à l'aide d'un granulomètre laser, sauf indication contraire selon la norme ISO 13320-1 (1999).

On utilise un granulomètre par diffraction laser « Partica LA-950V2 » de la société HORIBA, équipé de son logiciel (P2000074001H version 4.11) de traitement des données. Les paramètres de programmation du mesurage sont les suivants: utilisation du modèle de Fraunhofer ; pas de traitement préalable de l'échantillon aux ultrasons ; vitesse de circulation dans la cuve : 6 (correspond à environ 1400 tours/min) ; vitesse d'agitation dans la cellule : 6 (soit environ 2300 tours/min) ; laser rouge (650 nm) ; distance focale de l'objectif: 450 mm ; contrôle préalable de l'alignement du laser et mesure du bruit de fond (cuve avec éthanol).

Une suspension de l'échantillon à tester est tout d'abord préparée : pour cela, environ 500 mg d'échantillon sont placés dans un bécher vide (volume environ 100 ml) ; quelques gouttes d'éthanol titré à 95° sont ensuite utilisées pour mouiller l'échantillon et former une pâte ayant la consistance d'une pâte dentifrice ; enfin, 40 ml d'éthanol sont ajoutés à cette préparation qui est alors mise sous agitation à l'aide d'un barreau aimanté et d'un agitateur magnétique (agitateur magnétique IKA® « RET Basic », graduation 750) pendant environ 15 s.

Puis la suspension ainsi obtenue est injectée peu à peu, à l'aide d'une pipette, dans la cuve de préparation du granulomètre initialement remplie d'éthanol à 95° (niveau bas, soit environ 180 ml), jusqu'à un niveau d'obscuration de la cellule de mesure, affiché sur l'appareillage, compris entre 15 et 20% (correspondant à l'optimum de concentration). Le mesurage est réalisé immédiatement après stabilisation du niveau d'obscuration, avec trois mesures successives sur la même préparation pour un contrôle de répétabilité. Pour valider ce premier mesurage, une nouvelle préparation (suspension) est réalisée et analysée selon le même protocole : les deux mesurages doivent être identiques (reproductibilité selon préconisations de la norme). Après chaque préparation et mesurage, la cellule et la cuve de préparation du granulomètre laser sont rincées deux fois avec de l'eau déminéralisée.

Les données enregistrées sont finalement exploitées par le logiciel du granulomètre qui délivre la courbe de distribution volumétrique des tailles ainsi que les caractéristiques recherchées de la distribution volumétrique ($D_{10}$, $D_{50}$, $D_{90}$ et *Span*).

Additifs divers

Les compositions de caoutchouc de l'invention comportent également tout ou partie des additifs usuels habituellement utilisés dans les compositions d'élastomères destinées à la fabrication de bandes de roulement pour pneumatiques, notamment pour pneumatiques hiver, comme par exemple des agents de protection tels que cires anti-ozone, anti-ozonants chimiques, anti-oxydants, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir des activateurs de couplage lorsqu'un agent de couplage est utilisé, des agents de recouvrement de la charge inorganique ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru ; ces agents sont par exemple des silanes hydrolysables tels que des alkyl-alkoxysilanes, des polyols, des polyéthers, des amines, des polyorganosiloxanes hydroxylés ou hydrolysables.

Fabrication des compositions de caoutchouc et des bandes de roulement

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions comporte par exemple et de préférence les étapes suivantes :

- incorporer à l'élastomère diénique (ou le mélange d'élastomères diéniques), dans un mélangeur, plus de 30 pce d'un agent plastifiant liquide, entre 50 et 150 pce d'une charge renforçante, entre 2 et 40 pce des microparticules du sulfate hydrosoluble de métal alcalin ou alcalino-terreux, en malaxant thermo-mécaniquement le tout, en une ou plusieurs fois, jusqu'à atteindre une température maximale comprise entre 130°C et 200°C ;
- refroidir l'ensemble à une température inférieure à 100°C ;
- incorporer ensuite un système de réticulation ;
- malaxer le tout jusqu'à une température maximale inférieure à 120°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de réticulation. Après refroidissement du mélange ainsi obtenu au cours de la première phase non-productive, on incorpore alors le système de réticulation à basse température, généralement dans un mélangeur externe tel qu'un mélangeur à cylindres ; le tout est alors mélangé (phase productive) pendant quelques min, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont plus préférentiellement choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée, par exemple sous la forme d'un profilé

de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La composition de caoutchouc selon l'invention peut constituer la totalité ou une partie seulement de la bande de roulement conforme à l'invention, dans le cas d'une bande de roulement de type composite qui serait formée de plusieurs compositions de caoutchouc de formulations différentes.

L'invention concerne les compositions de caoutchouc et les bandes de roulement précédemment décrites tant à l'état cru (i.e., avant cuisson) qu'à l'état cuit (i.e., après réticulation ou vulcanisation).

EXEMPLES DE REALISATION DE L'INVENTION

Préparation des compositions de caoutchouc et bandes de roulement

On procède pour les essais qui suivent de la manière suivante: on introduit dans un mélangeur interne, dont la température initiale de cuve est d'environ 60°C, successivement la charge renforçante (par exemple une charge inorganique renforçante telle que silice et son agent de couplage associé), l'agent plastifiant liquide, les microparticules de sulfate hydrosoluble, l'élastomère diénique (ou coupage d'élastomères diéniques) ainsi que les divers autres ingrédients à l'exception du système de vulcanisation ; le mélangeur est ainsi rempli à environ 70% (% en volume). On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement de pneumatiques hiver pour véhicule tourisme.

Tests de friction

Dans cet essai, on compare trois compositions (notées C-0, C-1 et C-2) à base d'élastomères diéniques (coupage NR et BR à taux de liaisons cis-1,4 supérieur à 95%), essentiellement renforcées par de la silice, dans lesquelles est utilisée ou non une fraction (dans cet exemple 10 pce) de microparticules d'un sulfate hydrosoluble de métal alcalin ou alcalino-terreux (dans cet exemple, du sulfate de magnésium).

Les tableaux 1 et 2 donnent respectivement la formulation (en pce) des trois compositions et les paramètres décrivant la distribution volumétrique de taille des microparticules utilisées, cette distribution étant caractérisée selon la méthode détaillée précédemment. Le taux de plastifiant liquide a été ajusté dans les compositions C-1 et C-2 ceci afin de maintenir la rigidité au même niveau que celui de la composition témoin C-0 (dureté Shore A égale à environ 53 dans les trois cas) : de manière connue, une rigidité identique est la condition nécessaire à une comparaison rigoureuse des performances de roulage sur glace.

La composition C-0 est une composition témoin, elle est dépourvue de microparticules. La composition C-1 est la composition de référence, elle comporte 10 pce de microparticules conventionnelles (type A) de sulfate de magnésium, similaires à celles décrites et utilisées dans la demande WO 2010/009850 citée en introduction du présent mémoire. La distribution volumétrique de taille de ces particules ne satisfait pas aux exigences de la présente invention, avec notamment un paramètre $D_{50}$ qui est inférieur à 50 $\mu$m et une valeur de *Span* qui est proche de 3,0.

La composition C-2 est la seule composition conforme à l'invention, elle comporte 10 pce de microparticules de sulfate de magnésium avec une distribution volumétrique de taille spécifique (type B) qui satisfait les exigences de la présente invention, avec notamment d'une part un paramètre $D_{50}$ qui est compris entre 50 $\mu$m et 150 $\mu$m, d'autre part une valeur de *Span* qui est comprise entre 0,5 et 1,5. Ces microparticules de type B ont été obtenues par filtration, à l'aide d'un tamisage approprié, des microparticules de type A précédentes, afin de resserrer (rendre plus étroite) et recentrer notablement la distribution de taille.

Ces trois compositions ont été soumises à un test laboratoire consistant à mesurer leur coefficient de friction sur glace. Le principe repose sur un patin de composition de caoutchouc glissant à une vitesse donnée (par exemple égale à 5 km/h) sur une piste de glace (température de la glace fixée a -2 C) avec une charge imposée (par exemple égale à 3 kg/cm$^2$). On mesure les forces générées dans le sens de l'avancement (Fx) du patin et perpendiculaire à l'avancement (Fz) ; le rapport Fx/Fz détermine le coefficient de friction de l'éprouvette sur la glace.

Ce test dont le principe est bien connu de l'homme du métier (voir par exemple demandes de brevet EP 1052270, EP 1505112 et WO 2010/009850 précitée) permet d'évaluer, dans des conditions représentatives, l'adhérence

sur glace fondante qui serait obtenue lors d'un essai de roulage sur un véhicule équipé de pneumatiques dont la bande de roulement est constituée des mêmes compositions de caoutchouc.

Les résultats sont exprimés dans le tableau 3, une valeur supérieure à celle de la composition témoin (C-0), arbitrairement fixée à 100, indiquant un résultat amélioré c'est-à-dire une aptitude à une distance de freinage plus courte.

Ces résultats du tableau 3 confirment tout d'abord, pour la composition C-1 comparée à la composition témoin C-0, l'amélioration notable (environ 10%) qui est apportée par l'emploi de microparticules de sulfate de magnésium, comme cela a été déjà enseigné par la demande WO 2010/009850 précitée. Mais on constate surtout, à la lecture du tableau 3, que la composition C-2 conforme à l'invention présente encore une augmentation très nette (puisque doublée) du coefficient de friction sur glace par rapport à la composition témoin C-1, pour atteindre une performance augmentée de plus de 20% comparativement à la composition témoin (C-0) qui est totalement dépourvue de microparticules.

En conclusion, la composition de caoutchouc conforme à l'invention, grâce à l'incorporation de microparticules présentant une distribution volumétrique de taille étroite et spécifique, offre aux pneumatiques et à leurs bandes de roulement une performance d'adhérence sur glace qui est encore notablement améliorée par rapport aux compositions de caoutchouc de l'art antérieur. Ainsi, à performance d'adhérence identique, on peut aussi envisager de réduire de manière notable la quantité de microparticules dans les compositions de bandes de roulement, comparativement à ces compositions de l'art antérieur.

**Tableau 1**

| Composition N°: | C-0 | C-1 | C-2 |
|---|---|---|---|
| BR (1) | 60 | 60 | 60 |
| NR (2) | 40 | 40 | 40 |
| silice (3) | 80 | 80 | 80 |
| agent de couplage (4) | 5 | 5 | 5 |
| microparticules type A (5) | - | 10 | - |
| microparticules type B (6) | - | - | 10 |
| noir de carbone (7) | 5 | 5 | 5 |
| huile non aromatique (8) | 50 | 55 | 55 |
| résine plastifiante (9) | 15 | 15 | 15 |
| DPG (10) | 1.5 | 1.5 | 1.5 |
| ZnO | 1.2 | 1.2 | 1.2 |
| acide stéarique | 1 | 1 | 1 |
| cire anti-ozone | 1.5 | 1.5 | 1.5 |
| antioxydant (11) | 2 | 2 | 2 |
| soufre | 2 | 2 | 2 |
| accélérateur (12) | 1.7 | 1.7 | 1.7 |

(1) BR avec 4,3% de 1-2 ; 2,7% de trans ; 97% de cis 1-4 (Tg = -104°C) ;
(2) Caoutchouc naturel (peptisé) ;
(3) silice "Zeosil 1165MP" de la société Rhodia, type "HDS" (BET et CTAB : environ 160 $m^2/g$);
(4) agent de couplage TESPT ("Si69" de la société Degussa) ;
(5) sulfate de magnésium type A ("MG-0K" de la société Ako Kasei) ;
(6) sulfate de magnésium type B (sulfate de magnésium A après filtration) ;
(7) grade ASTM N234 (société Cabot) ;
(8) huile MES ("Catenex SNR" de Shell) ;
(9) résine haute Tg C5/C9 (« Escorez ECR 273 de la société Exxon)
(10) diphénylguanidine (Perkacit DPG de la société Flexsys) ;
(11) N-1,3-diméthylbutyl-N-phénylparaphénylènediamine (Santoflex 6-PPD de la société Flexsys);
(12) N-dicyclohexyl-2-benzothiazol-sulfénamide ("Santocure CBS" de la société Flexsys).

**Tableau 2**

| Microparticules : | A | B |
|---|---|---|
| $D_{10}$ | 15 | 52 |
| $D_{50}$ | 39 | 84 |
| $D_{90}$ | 130 | 140 |
| *Span* | 2.95 | 1.05 |

**Tableau 3**

| Composition : | C-0 | C-1 | C-2 |
|---|---|---|---|
| Friction sur glace (-2°C) | 100 | 111 | 122 |

**Revendications**

**1.** Composition de caoutchouc utilisable notamment comme bande de roulement d'un pneumatique, à base d'au moins un élastomère diénique, plus de 30 pce d'un agent plastifiant liquide, entre 50 et 150 pce d'une charge renforçante, entre 2 et 40 pce de microparticules d'un sulfate hydrosoluble de métal alcalin ou alcalino-terreux, **caractérisée en ce que** la distribution volumétrique de taille desdites microparticules, mesurée par granulométrie laser selon la norme ISO 13320-1, satisfait les relations suivantes :

-

$$50\ \mu m < D_{50} < 150\ \mu m\ ;$$

-

$$0{,}50 < Span < 1{,}50\ ,$$

dans lesquelles:

- $D_{50}$ est le diamètre de la particule médiane correspondant à 50% de la distribution cumulative des particules ;
-

$$Span = (D_{90} - D_{10}) / D_{50}\ ;$$

- $D_{10}$ et $D_{90}$ représentent le diamètre de particule correspondant respectivement à 10% et à 90% de la distribution cumulative des particules.

**2.** Composition selon la revendication 1, dans laquelle :

$$75\ \mu m < D_{50} < 125\ \mu m.$$

**3.** Composition selon la revendication 1 ou 2, dans laquelle :

$$0{,}75 < Span < 1{,}25.$$

4. Composition selon l'une quelconque des revendications 1 à 3, dans laquelle :

$$D_{10} > 30\ \mu m.$$

5. Composition selon l'une quelconque des revendications 1 à 4, dans laquelle :

$$D_{90} < 180\ \mu m.$$

6. Composition selon l'une quelconque des revendications 1 à 5, dans laquelle le taux de microparticules est compris entre 2 et 30 pce.

7. Composition selon l'une quelconque des revendications 1 à 6, dans laquelle le sulfate hydrosoluble est un sulfate de magnésium.

8. Composition selon l'une quelconque des revendications 1 à 7, dans laquelle l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

9. Composition selon la revendication 8, comportant plus de 50 pce de caoutchouc naturel ou de polyisoprène de synthèse, ou plus de 50 pce d'un polybutadiène ayant un taux de liaisons cis-1,4 supérieur à 90%.

10. Composition selon l'une quelconque des revendications 1 à 9, dans laquelle le taux de charge renforçante totale est compris entre 60 et 120, de préférence entre 70 et 100 pce.

11. Composition selon l'une quelconque des revendications 1 à 10, dans laquelle le plastifiant liquide est choisi dans le groupe constitué par constitué par les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

12. Composition selon la revendication 11, dans laquelle le taux de plastifiant liquide est supérieur à 40 pce, de préférence compris dans un domaine de 50 à 100 pce.

13. Composition selon l'une quelconque des revendications 1 à 12, comportant une résine hydrocarbonée présentant une Tg supérieure à 20°C, de préférence choisie dans le groupe constitué par les résines d'homopolymère ou copolymère de cyclopentadiène, les résines d'homopolymère ou copolymère de dicyclopentadiène, les résines d'homopolymère ou copolymère terpène, les résines d'homopolymère ou copolymère de coupe C5, les résines d'homopolymère ou copolymère de coupe C9, et les mélanges de ces résines.

14. Composition selon la revendication 13, dans laquelle le taux de résine hydrocarbonée est compris entre 3 et 60 pce.

15. Pneumatique dont la bande de roulement comporte une composition conforme à l'une quelconque des revendications 1 à 14.

**Patentansprüche**

1. Kautschukzusammensetzung, die insbesondere als Lauffläche eines Reifens verwendet werden kann, auf Basis von mindestens einem Dienelastomer, mehr als 30 phe eines flüssigen Weichmachers, zwischen 50 und 150 phe eines verstärkenden Füllstoffs, zwischen 2 und 40 phe Mikropartikel eines wasserlöslichen Alkalimetall- oder Erdalkalimetallsulfats, **dadurch gekennzeichnet, dass** die durch Lasergranulometrie gemäß ISO-Norm 13320-1 gemessene volumetrische Größenverteilung der Mikropartikel die folgenden Beziehungen erfüllt:

-

$$50\ \mu m < D_{50} < 150\ \mu m;$$

-

$$0{,}50 < \mathit{Span} < 1{,}50,$$

worin:

- $D_{50}$ der mittlere Partikeldurchmesser ist, der 50% der kumulativen Verteilung der Partikel entspricht;
-

$$\mathit{Span} = (D_{90} - D_{10}) / D_{50};$$

- $D_{10}$ und $D_{90}$ für den Partikeldurchmesser stehen, der 10% bzw. 90% der kumulativen Verteilung der Partikel entspricht.

**2.** Zusammensetzung nach Anspruch 1, wobei:

$$75\ \mu m < D_{50} < 125\ \mu m.$$

**3.** Zusammensetzung nach Anspruch 1 oder 2, wobei:

$$0{,}75 < \mathit{Span} < 1{,}25.$$

**4.** Zusammensetzung nach einem der Ansprüche 1 bis 3, wobei:

$$D_{10} > 30\ \mu m.$$

**5.** Zusammensetzung nach einem der Ansprüche 1 bis 4, wobei:

$$D_{90} < 180\ \mu m.$$

**6.** Zusammensetzung nach einem der Ansprüche 1 bis 5, wobei der Gehalt an Mikropartikeln zwischen 2 und 30 phe liegt.

**7.** Zusammensetzung nach einem der Ansprüche 1 bis 6, wobei es sich bei dem wasserlöslichen Sulfat um ein Magnesiumsulfat handelt.

**8.** Zusammensetzung nach einem der Ansprüche 1 bis 7, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

**9.** Zusammensetzung nach Anspruch 8, umfassend mehr als 50 phe Naturkautschuk oder synthetisches Polyisopren oder mehr als 50 phe eines Polybutadiens mit einem Gehalt an cis-1,4-Bindungen von mehr als 90%.

**10.** Zusammensetzung nach einem der Ansprüche 1 bis 9, wobei der Gesamtgehalt an verstärkendem Füllstoff zwischen 60 und 120 phe und vorzugsweise zwischen 70 und 100 phe liegt.

**11.** Zusammensetzung nach einem der Ansprüche 1 bis 10, wobei der flüssige Weichmacher aus der Gruppe bestehend aus naphthenischen Ölen, Paraffinölen, MES-Ölen, TDAE-Ölen, mineralischen Ölen, pflanzlichen Ölen, Ether-Weichmachern, Ester-Weichmachern, Phosphat-Weichmachern, Sulfonat-Weichmachern und Mischungen dieser Verbindungen ausgewählt ist.

**12.** Zusammensetzung nach Anspruch 11, wobei der Gehalt an flüssigem Weichmacher über 40 phe und vorzugsweise im Bereich von 50 bis 100 phe liegt.

**13.** Zusammensetzung nach einem der Ansprüche 1 bis 12, umfassend ein Kohlenwasserstoffharz mit einer Tg von mehr als 20°C, vorzugsweise ausgewählt aus der Gruppe bestehend aus Homopolymer- oder Copolymerharzen von Cyclopentadien, Homopolymer- oder Copolymerharzen von Dicyclopentadien, Terpen-Homopolymer- oder -Copolymerharzen, C5-Schnitt-Homopolymer- oder -Copolymerharzen, C9-Schnitt-Homopolymer- oder -Copolymerharzen und Mischungen dieser Harze.

**14.** Zusammensetzung nach Anspruch 13, wobei der Gehalt an Kohlenwasserstoffharz zwischen 3 und 60 phe liegt.

**15.** Reifen, dessen Lauffläche eine Zusammensetzung gemäß einem der Ansprüche 1 bis 14 umfasst.

## Claims

**1.** Rubber composition usable in particular as tread for a tyre, based on at least a diene elastomer, more than 30 phr of a liquid plasticizing agent, between 50 and 150 phr of a reinforcing filler, between 2 and 40 phr of microparticles of a water-soluble alkali metal or alkaline earth metal sulphate, **characterized in that** the volume size distribution of the said microparticles, measured by laser particle sizing according to Standard ISO 13320-1, satisfies the following relationships:

-

$$50\ \mu m < D_{50} < 150\ \mu m,$$

-

$$0.50 < Span < 1.50,$$

in which:

- $D_{50}$ is the diameter of the median particle corresponding to 50% of the cumulative distribution of the particles;
-

$$Span = (D_{90} - D_{10})/D_{50};$$

- $D_{10}$ and $D_{90}$ represent the particle diameter corresponding respectively to 10% and to 90% of the cumulative distribution of the particles.

**2.** Composition according to Claim 1, in which:

$$75\ \mu m < D_{50} < 125\ \mu m.$$

**3.** Composition according to Claim 1 or 2, wherein:

$$0.75 < Span < 1.25.$$

**4.** Composition according to any one of Claims 1 to 3, wherein:

$$D_{10} > 30\ \mu m.$$

**5.** Composition according to any one of Claims 1 to 4, wherein:

$$D_{90} < 180\ \mu m.$$

**6.** Composition according to any one of Claims 1 to 5, wherein the content of microparticles is between 2 and 30 phr.

**7.** Composition according to any one of Claims 1 to 6, wherein the water-soluble sulphate is a magnesium sulphate.

**8.** Composition according to any one of Claims 1 to 7, wherein the diene elastomer is chosen from the group consisting of natural rubber, synthetic polyisoprenes, polybutadienes, butadiene copolymers, isoprene copolymers and the mixtures of these elastomers.

**9.** Composition according to Claim 8, comprising more than 50 phr of natural rubber or of synthetic polyisoprene, or more than 50 phr of a polybutadiene having a content of cis-1,4 bonds of greater than 90%.

**10.** Composition according to any one of Claims 1 to 9, wherein the content of total reinforcing filler is between 60 and 120, preferably between 70 and 100 phr.

**11.** Composition according to any one of Claims 1 to 10, wherein the liquid plasticizer is chosen from the group consisting of naphthenic oils, paraffinic oils, MES oils, TDAE oils, mineral oils, vegetable oils, ether plasticizers, ester plasticizers, phosphate plasticizers, sulphonate plasticizers and the mixtures of these compounds.

**12.** Composition according to Claim 11, wherein the content of liquid plasticizer is greater than 40 phr, preferably included within a range of from 50 to 100 phr.

**13.** Composition according to any one of Claims 1 to 12, comprising a hydrocarbon resin exhibiting a Tg greater than 20°C, preferably chosen from the group consisting of cyclopentadiene homopolymer or copolymer resins, dicyclopentadiene homopolymer or copolymer resins, terpene homopolymer or copolymer resins, C5 fraction homopolymer or copolymer resins, C9 fraction homopolymer or copolymer resins, and the mixtures of these resins.

**14.** Composition according to Claim 13, wherein the content of hydrocarbon resin is between 3 and 60 phr.

**15.** Tyre the tread of which comprises a composition in accordance with any one of Claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- WO 2010009850 A
- WO 02088238 A
- WO 2005087859 A
- WO 2006061064 A
- WO 2007017060 A
- WO 9736724 A
- WO 9916600 A
- WO 2006069792 A
- WO 2006069793 A
- WO 2008003434 A
- WO 2008003435 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- EP 1052270 A
- EP 1505112 A


### Littérature non-brevet citée dans la description


- **R. MILDENBERG ; M. ZANDER ; G. COLLIN.** hydrocarbon Resins. VCH, 1997